# EUROPEAN PATENT APPLICATION

(11) **EP 2 399 705 A1**
(43) Date of publication of application: **28.12.2011**
(21) Application number: 11004834.5
(22) Date of filing: 14.06.2011
(51) Int. Cl.: B23Q 1/70, B23Q 11/00, B23Q 17/22, G05B 19/404

(54) **Spindle provided with a device for the dimensional compensation thereof**

(30) Priority: 22.06.2010 IT MI20101131
(71) Applicant: PRO-MEC S.r.l., 20122 Milano (IT)
(72) Inventor: Maggiolini, Giancarlo, 20010 Bareggio (MI) (IT)
(74) Representative: Lecce, Giovanni

(57) **Abstract**

A spindle (10) provided with a device for the dimensional compensation thereof comprises a first tubular body (12) carrying a processing tool at the front end and a second tubular body (14), of any suitable material, extending coaxially into the first tubular body (12) almost by the entire length. Said second tubular body (14) supports a plurality of sensors (18) suitable for detecting the temperature existing in multiple points close to the inner side surface of the first tubular body (12) during the process.

## Description

The present invention relates to a spindle provided with a device for the dimensional compensation thereof.

More in particular, the present invention relates to a spindle of a machine tool provided with a device suitable for automatically carrying out the dimensional compensation correlated to the temperature variation during the process steps.

It is known that some mechanical processes are carried out with tools carried by a spindle. Such processes, consisting for example in boring and milling, often require extreme accuracy and consequently they allow minimum tolerances; while the use of numerical control machines allows carrying out highly accurate operations, in any case there are drawbacks related to the expansions caused by the more or less localised increase in temperature. This can easily lead to alterations in the tool positioning, causing differences in both the processing of parts of a single piece and between different pieces made in a sequence. In particular, the spindle overheating may cause such elongation as to prevent respecting the required process tolerances.

A solution has been devised to obviate this drawback which provides for the use of position sensors associated to tubes and/or bars having a thermal expansion coefficient substantially different from that of the material constituting the spindle. The position sensor or sensors detect the relative sliding between the spindle and the tube inserted therein, detecting the difference between the elongations thereof due to thermal expansion.

The compensation of the spindle positioning heights, which is repositioned by ball recirculation screws and motors, may be obtained through an algorithm added to the software of the machine numerical control. A solution of this kind, described for example in Italian patent no. 1,335,534, is constructively complex and requires the use of specific materials for making the tube and/or the bar with expansion coefficients that are considerably different than that of the material constituting the spindle or, optionally, other comparison elements. As a consequence, said solution also implies considerable costs for the manufacturing thereof.

The object of the present invention is to obviate the drawbacks mentioned hereinabove.

More in particular, the object of the present invention is to provide a spindle provided with a device suitable for the dimensional compensation thereof correlated to the temperature variation during the process steps.

A further object of the invention is to provide a spindle as defined above wherein said dimensional compensation depending on the temperature is obtained in a simple manner and does not require the use of specific parametering materials.

A further object of the invention is to provide the users with a spindle with device for the dimensional compensation thereof suitable for ensuring high level of resistance and reliability over time, also such as to be easily and inexpensively constructed.

These and yet other objects are achieved by the spindle provided with a device for the dimensional compensation thereof of the present invention, which comprises a first tubular body carrying a processing tool at the front end and a second tubular body, of any suitable material, extending coaxially into the first tubular body almost by the entire length, and which is essentially characterised in that said second tubular body supports a plurality of sensors suitable for detecting the temperature existing in multiple points close to the inner side surface of the first tubular body during the process.

The construction and functional features of the spindle provided with a device for the dimensional compensation thereof of the present invention will be better shown in the following description, wherein reference is made to the annexed drawing tables showing a preferred and non-limiting embodiment thereof, wherein:
figure 1 schematically shows a side view of the spindle of the present invention provided with a device for the dimensional compensation thereof;
figure 2 schematically shows a head view of the same spindle;
figure 3 shows a schematic perspective view of a part of the dimensional compensation device associated to the spindle of the present invention;

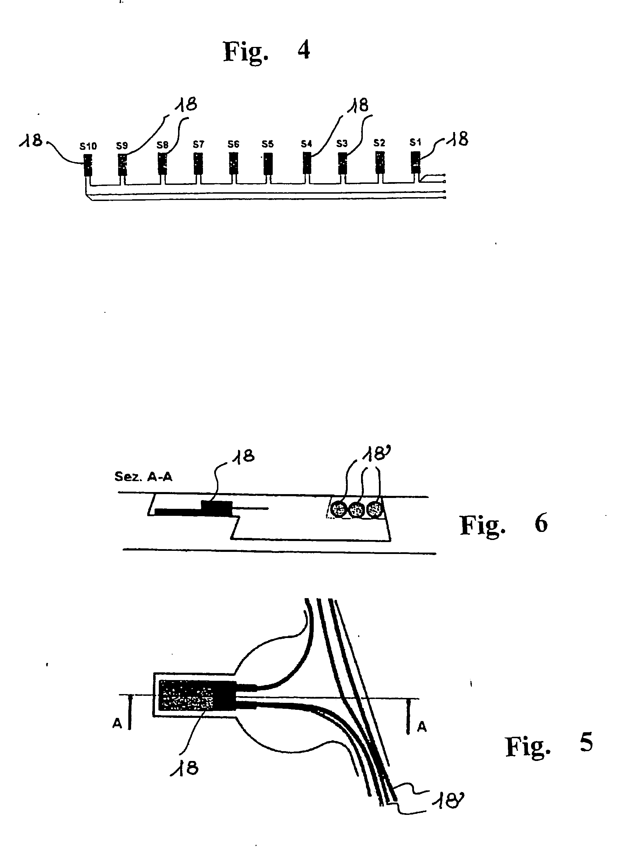

figure 4 schematically shows a series of detectors associated to said dimensional compensation device;
figure 5 schematically shows an enlarged detail of one of the detectors of the previous figure;
figure 6 shows a section along line A-A of figure 5.

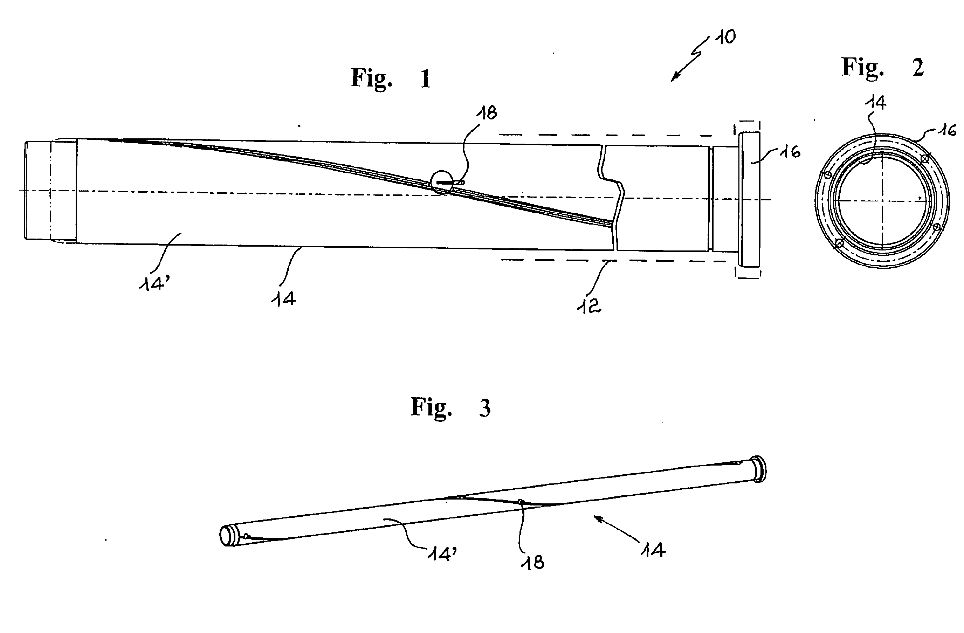

With reference to said figures, the spindle provided with a device for the dimensional compensation thereof of the present invention is globally indicated with reference numeral 10 in figure 1 and comprises a first tubular body, schematised with a dashed line with reference numeral 12, which at the front end carries a processing tool (not shown). According to the invention, spindle 10 is associated to a second tubular body 14, which extends coaxially into the first tubular body 12 almost by the entire length thereof; the second tubular body 14 is made of any suitable material, preferably of the same material as spindle 10. Said second tubular body 14 is frontally provided with an integral flange 16 for the fixing thereof to the first tubular body 12 wherein it is inserted and stabilised with per se known centring spacers, for example consisting of toric rings (not shown).

Along the outer side surface 14' of the second tubular body 14 there is arranged a plurality of temperature sensors 18, connected in a known manner through cables 18' to a microprocessor; said sensors 18 are arranged along the outer side surface 14' of the second tubular body 14 according to a spiral-wise pattern, as schematised in figure 3, and are stabilised with resin or equivalent means; preferably, sensors 18 are spaced from one another by an extent comprised between 150 and 300 mm.

Said sensors 18 detect the differences in temperature existing along the various parts of spindle 10, in particular in multiple points close to the inner side surface of the first tubular body 12 as they are positioned at a minimum distance from the same side surface; such distance is typically and not critically comprised between 0.1 and 0.5mm; the resulting space between sensors 18 and tubular body 12 is filled with per se known conductive pastes. The detection of temperatures in the various points does not depend on the type of material forming the second tubular body 14, which only constitutes the support of the temperature sensors 18 and forms a single body with the first tubular body 12.

The temperature values detected by the different sensors 18 are processed through a mathematical equation that transforms them into values referred to the actual spindle elongation. The temperature detection is preferably carried out at regular intervals of seconds or fractions of second to perform continuous corrections in relation to the spindle elongations and thus obtain constantly precise processes respecting the required dimensional tolerances. Afterwards, an intervention is made on the advance of the carriage connected to the spindle in a known manner for compensating the elongation of the same. As can be noticed from the above, the advantages achieved by the invention are clear.

In the spindle of the present invention, the elongations due to temperature variations during the process are correlated to the same temperature that is detected repeatedly and systematically by sensors 18; such detections are carried out in relation to multiple points and the values consequently found and thus processed and parameterised allow continuous and precise dimensional adjustments of the spindle.

While the invention has been described hereinbefore with particular reference to an embodiment thereof made by way of a non-limiting example, several changes and versions will appear clearly to a man skilled in the art in the light of the above description. The present invention is therefore intended to include any changes and versions thereof falling within the spirit and the scope of protection of the following claims.

## Claims

1. A spindle (10) provided with a device for the dimensional compensation thereof, comprising a first tubular body (12) carrying a processing tool at the front end and a second tubular body (14), of any suitable material, extending coaxially into the first tubular body (12) almost by the entire length, **characterised in that** said second tubular body (14) supports a plurality of sensors (18) suitable for detecting the temperature existing in multiple points close to the inner side surface of the first tubular body (12) during the process.

2. The spindle according to claim 1, **characterised in that** said sensors (18) suitable for detecting the temperature are arranged with a spiral-wise pattern along the outer side surface (14') of the second tubular body (14) whereto they are fixed by resins and/or equivalent means.

3. The spindle according to claim 2, **characterised in that** the sensors (18) are connected through cables (18') to a microprocessor for acquiring temperature data detected and subsequent mathematical processing thereof which correlates them to the length-wise dimensional variations of the same spindle.

4. The spindle according to claim 1, **characterised in that** the second tubular body (14) is provided with centring spacers, of the toric ring type or equivalent, for the stabilisation thereof in the first tubular body (12).

5. The spindle according to claim 2, **characterised in that** the sensors (18) arranged with a spiral-wise pattern along the outer side surface (14') of the second tubular body (14) are spaced from each other by an amount comprised between 150 and 300 mm.

6. The spindle according to claim 3, **characterised in that** the acquisition of temperature data detected by the sensors (18) takes place at regular intervals of seconds or fractions of second.

7. The spindle according to claim 1, **characterised in that** the sensors (18) arranged on the second tubular body (14) are spaced from the inner side surface of the first tubular body (12) by an amount comprised between 0.1 and 0.5 mm.
